# EUROPÄISCHE PATENTSCHRIFT

(11) **EP 2 093 548 B1**
(45) Veröffentlichungstag und Bekanntmachung des Hinweises auf die Patenterteilung: **22.03.2017**
(21) Anmeldenummer: 08102766.6
(22) Anmeldetag: 19.03.2008
(51) Int. Cl.: G01K 1/10, G01K 1/12, G01K 7/16, G01K 13/02

(54) **Hochtemperatursensor und Verfahren zu dessen Herstellung**
High temperature sensor and method for its manufacture
Capteur de haute température et son procédé de fabrication

(30) Priorität: 20.02.2008 EP 08101803
(43) Veröffentlichungstag der Anmeldung: 26.08.2009
(73) Patentinhaber: UST Umweltsensortechnik GmbH, 98716 Geschwenda (DE)
(72) Erfinder: Kiesewetter, Olaf, 98716, Geschwenda (DE); Witz, Eva, 99330, Gräfenroda (DE); Melchert, Volkmar, 98693, Martinroda (DE)
(74) Vertreter: Liedtke, Klaus

(56) Entgegenhaltungen:
- DE-A1-102004 021 634
- DE-A1-102007 011 535
- FR-A1- 2 880 685
- FR-A1- 2 893 126
- JP-A- 8 029 264
- US-A1- 2006 013 282

## Beschreibung

Die Erfindung betrifft einen Hochtemperatursensor zur Temperaturmessung gasförmiger Medien, insbesondere zur Messung der Abgastemperatur von Kraftfahrzeugen, mit einem Widerstandssensor und einem Schutzrohr.

Für die Temperaturmessung besteht eine Vielzahl von Applikationen in zahlreichen Anwendungsfeldern.

So ist in US 5 497 139 ein Temperatursensor und ein Verfahren zu seiner Herstellung beschrieben, bei dem ein Thermistor in einem hitzebeständigen Gehäuse angeordnet ist und die Zuleitungen in einer chemischen Verbindung des Typs (Al_{1-x-y}CrₓFe_{y})₂O₃ eingebettet sind. Nachteilig ist hierbei der komplizierte Aufbau, der nur eine geringe Schwingungsfestigkeit aufweist, da sich bei hohen Temperaturen der Schutzmantel stärker ausdehnt als das keramische Innenleben.

Ferner ist nach DE 100 62 041 C2 ein Temperatursensor bekannt, bei dem das Messelement in einem Schutzrohr angeordnet ist, dessen Anschlussleitung als Mantelrohr ausgeführt ist, welches im Bereich des Messelements fest mit dem Schutzrohr verbunden ist und das Messelement mit seinen Anschlüssen mit dem aus dem Mantelrohr austretenden Leitungen in einem temperaturfesten, elektrisch nicht leitendem Material im umgebenden Bereich des Schutzrohrs vergossen ist. Die hier verwendete Art der Abdichtung des Messelements zur Kontakteinrichtung ist zur Gewährleistung einer Langzeitbeständigkeit nicht geeignet.

Bei einer in EP 1 426 748 A1 beschriebenen, für den Kraftfahrzeugbereich vorgesehen Temperaturmessanordnung ist das Sensorelement mit verschiedenen koaxial angeordneten Schutzhüllen versehen. Die Anordnung ist für erhöhte Schwingungsbeanspruchungen nicht geeignet.

DE 10 2004 021 634 A1 beschreibt einen Temperatursensor, der einen Flansch mit einer Bohrung enthält, welcher an einer einen Fluidstrom führenden Fluidleitung anbringbar ist, und der ein MI-Kabel mit metallischen Kernen, die in einem metallischen Außenzylinder isoliert gehalten sind, sowie eine metallische Kappe, die an der vorderen Endseite des MI-Kabels befestigt ist, und ein Temperaturerfassungselement mit einem keramischen Substart aufweist.

Aus JP 8 029264 A ist ein Temperaturmesselement bekannt, bei dem in einer Hülle ein temperaturempfindliches Element angeordnet ist, welches mit Anschlussleitungen verbunden ist und von einer anorganischen Isolation umgeben ist.

Ferner ist in FR 2 893 126 A1 eine Anordnung angegeben, bei der in einem zylindrischen Gehäuse ein ringförmiges Dichtungsteil angeordnet ist, in dem sich elektrische Leitungen befinden, die flüssigkeitsdicht gegenüber einem Medium geschützt sind.

In US 2006/0013282 A1 ist ein Temperatursensor mit einer metallischen Schutzhülse beschrieben, in der sich ein Thermistor mit elektrischen Anschlussleitungen befindet, die zu einem MI-Kabel geführt sind. Zwischen Thermistor und Schutzhülse befindet sich ein isolierendes Befestigungselement.

FR 2 880 685 A1 beschreibt einen Temperaturfühler für die Automobiltechnik, bei dem sich ein temperaturempfindliches Element, das von einer keramischen Masse umgeben ist und sich in einer Schutzhülse befindet.

Aufgrund der steigenden Preise für Rohstoffe sowie der Bemühungen um verringerte Umweltbelastungen werden in zunehmendem Maße auch bei Kraftfahrzeugen Abgastemperaturmessungen notwendig. Die aus dem Kraftwerks- und Industriebereich bekannten Lösungen für Hochtemperaturmessungen sind auf Grund ihrer Kostenstruktur für derartige Anwendungsfälle nur bedingt verwendbar. Der Einsatz in Kraftfahrzeugen erfordert robuste, im Außenkontaktbereich feuchtigkeitsdichte und sehr kostengünstige Lösungen.

Der Erfindung liegt die Aufgabe zugrunde, einen Hochtemperatursensor der eingangs genannten Art anzugeben, der für den Einsatz in chemisch aggressiven Medien mit hohen Schwingungsbeanspruchungen geeignet ist, sich durch ein schnelles Ansprechen auszeichnet und der kostengünstig herstellbar ist.

Die Aufgabe wird erfindungsgemäß mit einem Hochtemperatursensor, welcher die im Anspruch 1 angegebenen Merkmale aufweist, gelöst.

Vorteilhafte Ausgestaltungen sind in den abhängigen Ansprüchen angegeben.

Der Hochtemperatursensor verfügt über ein chemisch beständiges, mechanisch stabiles und schwingungsfestes Gehäuse. Die erfindungsgemäße Lösung besteht darin, dass im vorderen Bereich des Schutzrohres, also in dem Bereich, welcher dem zu untersuchenden Medium zugewandt ist, ein Hochtemperatursensorelement angeordnet ist, das über ein Zwischenteil mit dem Schutzrohr gasdicht verbunden ist. Das Hochtemperatursensorelement enthält eine Keramikhülse, in der sich ein Hochtemperaturchip befindet, dessen Anschlussdrähte mit einem mechanischen Schutz versehen sind. Das Zwischenteil gewährleistet eine gasdichte, stabile Verbindung von Vorderteil und Schutzrohr, die auch bei Temperaturschwankungen sowie bei Schwingungs- und chemisch aggressiven Beanspruchungen eine hohe Lebensdauer gewährleistet.

Die Gestaltung des Hochtemperatursensors gewährleistet durch kurze Abstände zwischen Außenkappe und Temperaturmesselement, dass die zu ermittelnde Umgebungstemperatur schnell von der Außenkappe zum Messelement geleitet wird. Die Anordnung zeichnet sich deshalb durch ein schnelles Ansprechverhalten und geringen thermisch-statischen Fehler aus. Weiterhin ist vorteilhaft, dass die den Sensorchip tragenden Bauteile und die Anschlussleitungen mechanisch voneinander entkoppelt sind und die Anschlussleitungen des Sensorchips keinen Zugbeanspruchungen unterliegen. Dadurch wird eine hohe Sicherheit gegen Schwingungsbeanspruchungen gewährleistet. Darüber hinaus ermöglicht die Anordnung des Hochtemperaturbereichs an der Vorderseite der Gesamtanordnung auch, dass die Montage des Hochtemperatursensorchips von der Vorderseite aus erfolgen kann, was die Montage wesentlich erleichtert.

Eine vorteilhafte Ausführung sieht vor, dass das Zwischenteil aus Metall besteht und mit einer Außenstülpung versehen ist. Damit können mechanische Spannungen, die bei wechselnden Temperaturen infolge unterschiedlicher Ausdehnung verschiedener Materialien verursacht werden, vermieden werden.

Eine besonders präzise Lagesicherung ergibt sich dadurch, dass das Zwischenteil aus zwei Schichten mit verschiedenen Materialien besteht, so dass auch eine Verformung des Zwischenteils infolge des Bimetalleffektes weitgehend vermieden wird.

Eine weitere vorteilhafte Ausgestaltung sieht vor, dass das Zwischenteil aus einem Metallpulverspritzteil besteht. Eine derartige Ausführung zeichnet sich durch eine exzellente Haltbarkeit, große Härte und hohe Beständigkeit aus und kann kostengünstig mit üblichen pulvermetallurgischen Verfahren hergestellt werden.

Die Keramikhülse kann offen ausgeführt sein oder mit einem Boden verschlossen sein, so dass sie eine Abdeckkappe bildet.

Eine weitere vorteilhafte Ausführung besteht darin, dass im vorderen Bereich des Schutzrohres ein Hochtemperatursensorelement angeordnet ist, das über ein Zwischenteil aus Metall mit dem Schutzrohr gasdicht verbunden ist, wobei das Metallteil aus einem Pulverspritzmaterial (so genanntes MIM-Material) besteht.

Ferner ist es möglich, dass die Keramikhülse in Form einer Kappe ausgebildet ist, die das Hochtemperatursensorelement umschließt. Diese Ausführung ermöglicht ein besonders schnelles Ansprechen des Sensors.

Die Erfindung wird im Folgenden anhand eines Ausführungsbeispiels näher erläutert.

In den zugehörigen Zeichnungen zeigen:
- Figur 1: eine Ausführung mit Metallkappe,
- Figur 2: eine Ausführung mit Keramikkappe
- und Figur 3: eine Ausführung mit einem Zwischenteil aus einem Pulverspritzgussmaterial.

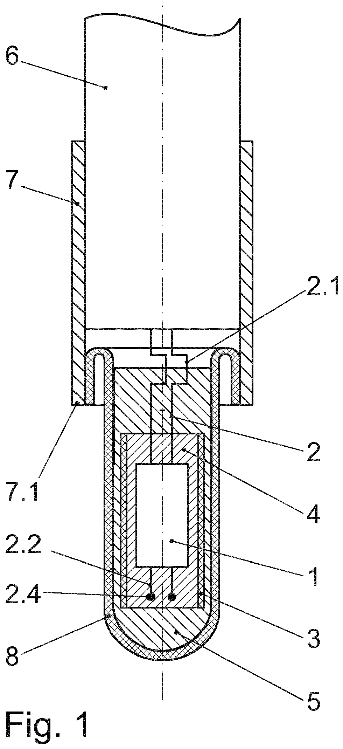

In **Figur 1** ist eine Ausführungsform dargestellt, bei der der Hochtemperatursensor im vorderen Bereich, der in das Prozessmedium ragt, mit einer Metallkappe 8 verschlossen ist. In einem Schutzrohr 7 ist die Mantelleitung 6 durch Verpressen befestigt. Das Schutzrohr 7 besteht hier aus einer in einem Ziehprozess hergestelltem Edelstahlschutzhülse und die Mantelleitung aus einer mit Al₂O₃-Pulver gefüllten Inconellleitung. Im vorderen Bereich des Hochtemperatursensors, der in das zu untersuchende Medium hineinragt, befindet sich ein Hochtemperaturbauelement. Dieses enthält den Hochtemperaturchip 1, der in einer offenen Keramikhülse 3 angeordnet ist. Die Keramikhülse 3 kann aber auch an der Unterseite mit einem Boden verschlossen sein. Der Hochtemperaturchip 1 ist in der Keramikhülse 3 in einer ersten Hochtemperaturzementschicht 4 eingebettet, die mit einem bei Einsatztemperatur verlaufenden Einbrennprozess formiert wurde. Hierbei ist die Anordnung so gestaltet, dass die Anschlussleitungen 2 parallel zum Hochtemperaturchip 1 verlaufen und die Verbindungsstellen sich vor dem Hochtemperaturchip 1 in Richtung zum Medium befinden. Die Materialauswahl und konstruktive Anordnung sind so gestaltet, dass sich beim Aufheizen des ganzen Hochtemperatursensors der vordere Bereich weniger ausdehnt als die inneren Anschlussleitungen 2, um eine schwingungsbedingte Zerstörung zu vermeiden, die durch Ausdehnungsunterschiede entstehen würde. Die aus der Mantelleitung 6 herausragenden elektrischen Anschlussleitungen 2 weisen einen Dehnungsausgleich 2.1 auf, der unterschiedliche Längenänderungen zwischen den Anschlussleitungen 2 und den Befestigungsteilen des Hochtemperaturchips 1 ausgleichen kann. Die Keramikhülse 3 ist mit einer zweiten Hochtemperaturzementschicht 5 in einer Metallkappe 8 befestigt. Die Metallkappe 8 bildet ein fingerhutartiges, mit einer Außenstülpung versehenes Kopfteil und ist mit dem Schutzrohr 7 mittels einer durch Laserschweißen erzeugten Schweißverbindung 7.1 gasdicht verbunden.

Ein wichtiger Vorteil des erfindungsgemäßen Hochtemperatursensors besteht darin, dass die Montage der Gesamtanordnung von der Richtung aus erfolgen kann, die im Einsatzfall dem Prozessmedium zugewandt ist. Die Montage wird dadurch wesentlich erleichtert und gewährleistet eine hohe Sicherheit, insbesondere für die Dichtheit sowie für die Schwingungsbeständigkeit der Verbindungsstellen. Bei der Fertigung des in diesem Ausführungsbeispiel beschriebenen Hochtemperatursensors wird zunächst eine Edelstahlschutzhülse hergestellt, was über einen Ziehprozess oder einen ähnlichen Prozess erfolgen kann. Diese Hülse bildet das Schutzrohr 7 der Anordnung und dient als Ausgangsteil bei der Montage des Hochtemperatursensors. Im vorderen Bereich, dem Hochtemperaturbereich, wird das Schutzrohr 7 mit einer Keramikhülse 3 verbunden, in der der Sensorchip 1 angeordnet wird. Der Hochtemperaturchip 1 wird in der Keramikhülse 3 mittels einer ersten Hochtemperaturzementschicht 4 befestigt, welche bei Einsatztemperatur durch einen Einbrennprozesses formiert wird. Anschließend erfolgt das Verschweißen der Chipanschlussdrähte 2.2. Danach wird die fingerhutartige, mit einer Außenstülpung versehene Metallkappe 8 über die Keramikhülse 3 geschoben, in dieser einzementiert und danach bei Einsatztemperatur ausgeheizt. Die Einsatztemperatur beträgt 800°C bis 900°C, vorzugsweise 850°C. Danach verbleibt ein Hohlraum, der vor dem Verschweißen der Metallkappe 8 mit der Luft oder einem inerten Gas gefüllt wird, wobei jegliche Feuchtigkeit vermieden wird.

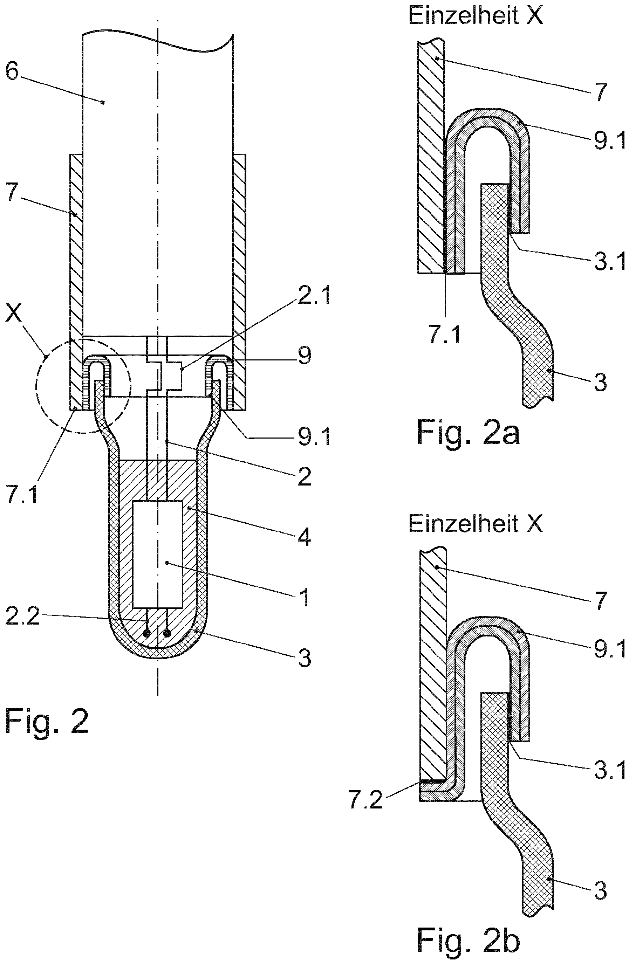

Bei der in **Figur 2** gezeigten Ausführungsform wird das Kopfteil von einer als Kappe ausgebildete Keramikhülse 3 gebildet. Der Hochtemperaturchip 1 wird damit gegenüber dem Prozessmedium geschützt. Die Keramikhülse 3 ist über das Zwischenteil 9 mit dem Schutzrohr 7 verbunden. Das Zwischenteil 9 ist ein kurzes umgestülptes Rohrteil aus Metall, welches vorzugsweise aus Inconell gefertigt wird.

Eine spezielle Ausführung für das Zwischenteil 9 erläutern die **Figuren 2a und 2b****.** Hierbei besteht das Zwischenteil 9 aus zwei Schichten mit verschiedenen Materialien. Vorzugsweise wird für die äußere Schicht Inconell und für die innere Schicht Titan verwendet. Dadurch werden die linearen Ausdehnungskoeffizienten der miteinander verbundenen Teile angeglichen. Die äußere Schicht ist mit dem Schutzrohr 7 verschweißt, das ebenfalls aus Inconell besteht, während die innere Schicht, die mit der Keramikhülse 3 verbunden ist, aus Titan besteht. Da Titan einen annähert gleichen linearen Ausdehnungskoeffizienten wie Keramik aufweist, werden mechanische Spannungen von den Verbindungsstellen des Zwischenteils 9 mit den benachbarten Teilen weitgehend ferngehalten. Diese Ausführung gewährleistet auch bei dynamischen Temperaturwechseln eine hohe Lebensdauer der Anordnung.
Bei der in Figur 2a gezeigten Variante sind die Teile mit einer an der Innenseite des Schutzrohres 7 angebrachten Laserschweißverbindung 7.1 zusammengefügt. Bei der in Figur 2b dargestellten Ausführung ist das Zwischenteil 9 an seinem unteren Rand nach außen gestülpt und mit einer weiteren Schweißverbindung 7.2, die vorzugsweise durch Kondensatorwulstschweißen erzeugt wird, am Schutzrohr 7 befestigt.

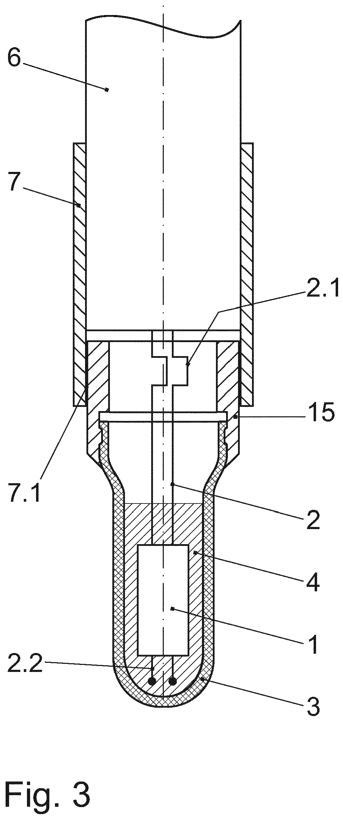

Bei der in **Figur 3** gezeigten Ausführungsform ist die Keramikhülse 3 über das MIM-Zwischenteil 15 mit dem Schutzrohr 7 verbunden. Das MIM-Zwischenteil 15 ist ein formschlüssig angebrachtes Rohrstück, welches aus einem Pulverspritzgussmaterial gefertigt wird.

### BEZUGSZEICHENLISTE

- 1: Sensorchip
- 2: Anschlussleitung
2.1 Dehnungsausgleich
2.2 Chipanschlussdraht
2.4 Schweißstelle
- 3: Keramikhülse
- 4: Erste Hochtemperaturzementschicht
- 5: Zweite Hochtemperaturzementschicht
- 6: Mantelleitung
- 7: Schutzrohr
7.1 Laserschweißverbindung
7.2 weitere Schweißverbindung
- 8: Metallkappe
- 9: Zwischenteil
9.1 Glaslot
- 15: MIM-Zwischenteil

## Patentansprüche

1. Hochtemperatursensor, zur Temperaturmessung gasförmiger Medien, insbesondere zur Messung der Abgastemperatur von Kraftfahrzeugen, mit einem Widerstandssensor und einem Schutzrohr (7), wobei in dem in das Medium ragenden vorderen Bereich des Schutzrohres (7) ein Hochtemperaturbauelement angeordnet ist, welches über ein Zwischenteil (9) mit dem Schutzrohr (7) gasdicht verbunden ist, wobei sich im Hochtemperaturbauelement ein Hochtemperaturchip (1) befindet, dessen Chipanschlussdrähte (2.2) im vorderen Bereich an der dem Prozessmedium zugewandten Seite mit Anschlussleitungen (2) verbunden sind, wobei die Chipanschlussdrähte 2.2 mit Schutz- und Haltedrähten 2.3 umwickelt sind und wobei die Verbindungsstellen sich vor dem Hochtemperaturchip (1) in Richtung zum Medium befinden, und die Anschlussleitungen (2) parallel neben dem Hochtemperaturchip (1) zu einer im Schutzrohr befestigten Mantelleitung (6) geführt werden und der Hochtemperaturchip (1) von einem Keramikteil (3) umschlossen ist.

2. Hochtemperatursensor nach Anspruch 1, **dadurch gekennzeichnet, dass** das Zwischenteil (9) aus Metall besteht und mit einer Außenstülpung versehen ist.

3. Hochtemperatursensor nach Anspruch 2, **dadurch gekennzeichnet, dass** das Zwischenteil (9) aus zwei Schichten mit verschiedenen Materialien besteht.

4. Hochtemperatursensor nach Anspruch 1, **dadurch gekennzeichnet, dass** das Zwischenteil (9) aus einem Metallpulverspritzteil besteht.

5. Hochtemperatursensor nach einem der vorhergehenden Ansprüche, **dadurch gekennzeichnet, dass** das Keramikteil (3) als eine mit einem Boden verschlossene Hülse ausgebildet ist.

6. Hochtemperatursensor nach Anspruch 5, **dadurch gekennzeichnet, dass** die Keramikhülse (3) in Form einer Kappe ausgebildet ist, die das Hochtemperatursensorelement umschließt.

## Claims

1. High-temperature sensor for measuring the temperature of gaseous media, in particular for measuring the exhaust gas temperature of motor vehicles, comprising a resistance sensor and a protective tube (7), there being arranged in the front area of the protective tube (7) that projects into the medium a high-temperature component, which is connected to the protective tube (7) in a gas-tight manner by way of an adapter (9), there being located in the high-temperature component a high-temperature chip (1), the chip connection wires (2.2) of which are connected in the front area, on the side facing the process medium, to connection leads (2), the chip connection wires 2.2 being wound around by protecting and retaining wires 2.3 and the connecting points being located in front of the high-temperature chip (1) in the direction of the medium, and the connection leads (2) being led in parallel alongside the high-temperature chip (1) to a sheathed lead (6) fastened in the protective tube, and the high-temperature chip (1) being enclosed by a ceramic part (3).

2. High-temperature sensor according to Claim 1, **characterized in that** the adapter (9) consists of metal and is provided with a reverse drawn outer shroud.

3. High-temperature sensor according to Claim 2, **characterized in that** the adapter (9) consists of two layers of different materials.

4. High-temperature sensor according to Claim 1, **characterized in that** the adapter (9) consists of a metal-powder injection moulding.

5. High-temperature sensor according to one of the preceding claims, **characterized in that** the ceramic part (3) is formed as a sleeve that is closed by a base.

6. High-temperature sensor according to Claim 5, **characterized in that** the ceramic sleeve (3) takes the form of a cap that encloses the high-temperature sensor element.

## Revendications

1. Capteur de haute température, pour la mesure de la température de milieux gazeux, en particulier pour la mesure de la température de gaz d'échappement de véhicules automobiles, avec un capteur de résistance et un tube de protection (7), dans lequel un composant à haute température, qui est assemblé de façon étanche au gaz au tube de protection (7) au moyen d'une pièce intermédiaire (9), est disposé dans la région avant du tube de protection (7) plongeant dans le milieu, dans lequel il se trouve dans le composant à haute température une puce à haute température (1), dont les fils de raccordement de puce (2.2) sont raccordés dans la région avant à des conducteurs de raccordement (2) sur le côté tourné vers le milieu de traitement, dans lequel les fils de raccordement de puce (2.2) sont entourés de fils de protection et de maintien enroulés (2.3) et dans lequel les points de raccordement se trouvent devant la puce à haute température (1) en direction du milieu, et les conducteurs de raccordement (2) sont menés parallèlement à côté de la puce à haute température (1) jusqu'à une conduite enveloppe (6) fixée dans le tube de protection et la puce à haute température (1) est entourée par une pièce en céramique (3) .

2. Capteur de haute température selon la revendication 1, **caractérisé en ce que** la pièce intermédiaire (9) se compose de métal et est dotée d'un bord retourné extérieurement.

3. Capteur de haute température selon la revendication 2, **caractérisé en ce que** la pièce intermédiaire (9) se compose de deux couches en matériaux différents.

4. Capteur de haute température selon la revendication 1, **caractérisé en ce que** la pièce intermédiaire (9) se compose d'une pièce injectée en poudre métallique.

5. Capteur de haute température selon l'une quelconque des revendications précédentes, **caractérisé en ce que** la pièce en céramique (3) est réalisée en forme de douille fermée avec un fond.

6. Capteur de haute température selon la revendication 5, **caractérisé en ce que** la douille en céramique (3) est réalisée en forme de capuchon, qui entoure l'élément de capteur de haute température.
